# EUROPÄISCHE PATENTANMELDUNG

(11) **EP 1 447 204 A1**
(43) Veröffentlichungstag der Anmeldung: **18.08.2004**
(21) Anmeldenummer: 03100310.6
(22) Anmeldetag: 12.02.2003
(51) Int. Cl.: B29C 65/08, B23K 20/10

(54) **Vorrichtung und Verfahren zum Bearbeiten von Bauteilen**

(71) Anmelder: Telsonic Holding AG, 9552 Bronschhofen (CH)
(72) Erfinder: Solenthaler, Peter, 9542, Münchwilen (CH)
(74) Vertreter: Müller, Christoph Emanuel

(57) **Zusammenfassung**

In einer Vorrichtung zum Ultraschall-Schweissen von Bauteilen (2a, 2b) werden Bauteile zwischen einer Sonotrode (3) und einem Gegenwerkzeug (4) eingelegt und mit UltraschallSchwingungen (U) beaufschlagt. Das Gegenwerkzeug (4) ist mit wenigstens einem Schwingungssensor (6; 16; 26a, 26b, 26c) versehen, mit welchem die von der Sonotrode (3) über die Bauteile (2a, 2b) auf das Gegenwerkzeug (4) übertragenen Schwingungen (S) messbar sind. Der Schwingungssensor (6, 26) kann insbesondere durch ein Piezo-Element gebildet sein, welches gleichzeitig zur Höhenverstellung des Gegenwerkzeugs (4) dient.

## Beschreibung

Die Erfindung betrifft eine Vorrichtung und ein Verfahren zum Bearbeiten, insbesondere zum Ultraschall-Verschweissen oder Schneiden von Bauteilen mit den Merkmalen des Oberbegriffs der unabhängigen Patentansprüche. Insbesondere betrifft die Erfindung ein Verfahren und eine Vorrichtung zum Bearbeiten von kontinuierlich geförderten Bauteilen wie beispielsweise Material-Bahnen.

Es ist bekannt, Bauteile, insbesondere aus Kunststoffmaterial durch Beaufschlagung mit Ultraschall-Energie zu verschweissen. Ausserdem ist es bekannt, Bauteile mittels Ultraschall-Energie zu verschweissen und entlang der Fügestelle zu schneiden.

Zu diesem Zweck kommt eine Sonotrode zum Einsatz, welche ein erstes Bauteil mit Ultraschall-Schwingungen beaufschlagt. Ein zweites Bauteil liegt auf einem Gegenwerkzeug, oft Amboss genannt, auf. Durch Beaufschlagung des ersten Bauteils mit Ultraschall-Schwingungen erwärmt sich das erste Bauteil im Bereich der Fügestelle und wird so mit dem zweiten Bauteil verschweisst. Beim Betrieb des Schweissverfahrens sind verschiedene Punkte zu beachten. Insbesondere ist es wichtig, dass der Spalt zwischen der Bearbeitungsfläche des Gegenwerkzeuges und einer aktiven Fläche der Sonotrode, mit welcher die Ultraschall-Schwingungen in das Bauteil eingeleitet werden, genau kontrolliert bleibt. Ist der Abstand zu gross, ist das Schweissresultat ungenügend, da nicht ausreichend Schwingungsenergie in die Bauteile eingetragen wird. Ist der Abstand zu klein, besteht die Gefahr, dass statt einer sauberen Schweissung ein teilweises Schneiden erfolgt. Wenn kein Schneiden gewünscht ist, ist eine solche Beeinträchtigung der Schweissstelle nicht akzeptierbar. Wenn der Abstand sehr klein wird oder sich sogar auf null reduziert, d. h. wenn die aktive Fläche der Sonotrode die Bearbeitungsfläche berührt, besteht ausserdem die Gefahr, dass die Bearbeitungsstelle des Gegenwerkzeuges aufgrund der eingeleiteten Ultraschall-Schwingung abgenutzt wird. Ein häufiger Ersatz des Gegenwerkzeuges ist die Folge davon.

Aufgrund des Eintrags von Schwingungen erwärmt sich im Betrieb die Sonotrode und/oder das Gegenwerkzeug. Aufgrund der Materialausdehnung reduziert sich daher der Spalt zwischen der aktiven Fläche der Sonotrode und der Bearbeitungsstelle des Gegenwerkzeugs. Es ist daher vorgeschlagen worden, mittels Verstellanordnungen die Sonotrode beweglich anzuordnen, so dass der Spalt angepasst werden kann.

Aus EP 920 977 ist beispielsweise eine Vorrichtung zum Bearbeiten einer Materialbahn bekannt, bei der die Sonotrode in einem Schlitten eingespannt ist, der über eine Verstelleinrichtung bezüglich dem Gegenwerkzeug verstellbar ist. Mit einem Kraftsensor wird eine die Sonotrode in Richtung des Gegenwerkzeugs beaufschlagende Kraft gemessen. Der Abstand der Sonotrode zum Gegenwerkzeug wird in Abhängigkeit dieser Kraft geregelt.

Aus EP 790 888 ist ebenfalls eine Vorrichtung zum Ultraschall-Bearbeiten bekannt, bei welcher der Abstand einer Ultraschall-Schwingeinheit zum Gegenwerkzeug über eine Verstelleinrichtung einstellbar ist. Der Spalt zwischen der Sonotrode und dem Gegenwerkzeug wird konstant gehalten. Die Verstelleinrichtung ist in Abhängigkeit der Temperatur der Sonotrode, des Konverters und/oder des Gegenwerkzeugs gesteuert. Dazu wird ein Temperatursensor verwendet.

Diese bekannten Vorrichtungen weisen alle bestimmte Nachteile auf. Insbesondere zielen sie alle auf die Konstanthaltung des Spaltes zwischen Gegenwerkzeug und Sonotrode. Dabei werden unterschiedliche Prozessbedingungen wie beispielsweise unterschiedliche Materialien der zu verbindenden Bauteile nicht oder nur ungenügend berücksichtigt. Wenn beispielsweise Bauteile aus relativ harten Materialien miteinander verbunden werden sollen, ist die Übertragung von Schwingungen in das Gegenwerkzeug verhältnismässig gross, so dass eine Abnutzung des Gegenwerkzeugs erfolgen kann. Bei gleicher Spaltbreite und weicheren Materialien, welche eine grössere Dämpfung aufweisen, wird die Bearbeitungsstelle des Gegenwerkzeugs hingegen in geringerem Mass beeinträchtigt.

Es ist deshalb eine Aufgabe der vorliegenden Erfindung, die Nachteile des Bekannten zu vermeiden, insbesondere eine Vorrichtung und ein Verfahren zum Bearbeiten von Bauteilen zu schaffen, welche eine hohe und gleichbleibende Qualität der Schweissung sicherstellen und welche die Abnutzung des Gegenwerkzeugs reduzieren oder vermeiden. Unter Bearbeiten wird im vorliegenden Fall insbesondere Ultraschall-Schweissen verstanden. Das Verfahren lässt sich auch zum Ultraschall-Schneiden anwenden. Das Verfahren und die Vorrichtung sind typischerweise für kontinuierlich zwischen einer Sonotrode und dem Gegenwerkzeug durchgeführte bahnförmige Bauteile geeignet. Es ist aber auch denkbar, die Erfindung auf einzeln zugeführte, miteinander zu verschweissende Bauteile anzuwenden.

Die Erfindung beruht auf der Erkenntnis, dass der Grad der Abnutzung des Gegenwerkzeugs nicht allein vom Spalt zwischen der Bearbeitungsstelle des Gegenwerkzeugs und der aktiven Fläche der Sonotrode abhängt. Stattdessen zielt die Erfindung darauf ab, die von der Sonotrode über die Bauteile in das Gegenwerkzeug eingetragene Schwingung zu kontrollieren, insbesondere die Amplitude der Schwingung unter einem vorgegebenen Wert zu halten. Damit ist es insbesondere möglich, die Abnutzung des Gegenwerkzeugs zu reduzieren. Gleichzeitig kann die Qualität einer Schweissstelle verbessert werden. Ausserdem ist es mit der Erfassung der in das Gegenwerkzeug übertragenen Schwingung auch möglich zu prüfen, ob ein sauberer Schnitt erzeugt wird. Dementsprechend weist die erfindungsgemässe Vorrichtung wenigstens eine Sonotrode auf, mit welcher ein erstes Bauteil mit Ultraschall-Schwingungen beaufschlagbar ist. Die Vorrichtung weist ausserdem ein Gegenwerkzeug auf, auf welchem das zweite Bauteil wenigstens im Bereich einer Bearbeitungsstelle auflegbar ist. Das Gegenwerkzeug ist mit wenigstens einem Schwingungssensor versehen. Mittels dem Schwingungssensor kann die von der Sonotrode über das erste und das zweite Bauteil auf das Gegenwerkzeug übertragene Schwingung gemessen werden.

Gemäss einer bevorzugten Ausführungsform ist das Gegenwerkzeug mit einer Verstelleinrichtung versehen, mit welcher das Gegenwerkzeug in einer Richtung gegen die Sonotrode hin höhenverstellbar ist. Mit der Höhenverstellung lässt sich der Abstand zwischen der aktiven Fläche der Sonotrode und der Bearbeitungsstelle des Gegenwerkzeugs und damit auch die in das Gegenwerkzeug übertragene Schwingung einstellen. Alternativ wäre es auch denkbar, die Sonotrode zu bewegen oder gegebenenfalls die Amplitude der Schwingung zu verändern.

Die Verstelleinrichtung des Gegenwerkzeugs ist bevorzugt durch wenigstens einen Piezo-Aktuator gebildet. Mit einem Piezo-Aktuator lässt sich die Höhenverstellung sehr rasch betätigen. Besonders bevorzugt kann der Schwingungssensor gleichzeitig durch den Piezo-Aktuator oder die Piezo-Aktuatoren gebildet sein. Aufgrund der in das Gegenwerkzeug übertragenen Schwingungen wird der Piezo-Aktuator einem Druck ausgesetzt. Dadurch wird ein Signal erzeugt, dessen Frequenz der Frequenz der Ultraschall-Schwingung entspricht. Dieses Signal kann als Gradmesser für die in das Gegenwerkzeug übertragene Schwingung verwendet werden. Gleichzeitig kann der Piezo-Aktuator durch Anlegen einer Gleichspannung in eine gewünschte Position gebracht oder darin gehalten werden.

Gemäss einer alternativen Ausführungsform ist es denkbar, das Gegenwerkzeug mehrteilig auszubilden. In jedem Teil des Werkzeugs kann ein separater Schwingungssensor angebracht sein. Auf diese Weise lässt sich die eingetragene Schwingung selektiv für jeden einzelnen Teil des Gegenwerkzeugs kontrollieren. Dies kann insbesondere sinnvoll sein, wenn Bauteile an mehreren Fügestellen miteinander verschweisst werden sollen.

Bei dieser alternativen Ausführungsform kann auch in jedem Teil des Gegenwerkzeugs ein einzelner Piezo-Aktuator angeordnet sein, der jeden Teil separat bewegen kann. Vorteilhaft bildet der Piezo-Aktuator den Schwingungssensor.

Die Vorrichtung ist bevorzugt mit einer Regelungsanordnung versehen, mit welcher die Amplitude der in das Gegenwerkzeug übertragenen Schwingung regelbar ist. Die Amplitude der im Gegenwerkzeug gemessenen Schwingung ist dabei die Regelgrösse.

Gemäss dem erfindungsgemässen Verfahren wird bevorzugt eine wie vorstehend beschriebene Vorrichtung eingesetzt. Im Verfahren wird ein erstes Bauteil bereitgestellt, welches mittels einer Sonotrode mit Ultraschall-Schwingungen beaufschlagbar ist. Ein zweites Bauteil wird auf einer Bearbeitungsstelle eines Gegenwerkzeugs bereitgestellt.

Das erste und das zweite Bauteil werden anschliessend im Bereich wenigstens einer Fügestelle oder Schnittstelle miteinander kontaktiert. Danach wird das erste Bauteil mit Ultraschall-Schwingungen beaufschlagt. Gemäss der Erfindung werden die in das Gegenwerkzeug übertragenen Schwingungen mit einem Schwingungssensor gemessen, insbesondere deren Amplitude. Die Amplitude der in das Gegenwerkzeug übertragenen Schwingung wird dabei geregelt. Die Regelung erfolgt insbesondere durch Einstellen des Abstandes zwischen der Bearbeitungsstelle des Gegenwerkzeugs und der aktiven Fläche der Sonotrode.

Bevorzugt wird das Gegenwerkzeug mittels wenigstens einem Piezo-Aktuator bewegt. Die in das Gegenwerkzeug übertragene Schwingung kann bevorzugt auch mit dem Piezo-Aktuator gemessen werden.

Wenn das Gegenwerkzeug mehrteilig ausgebildet ist, ist es bevorzugt, die in jedes einzelne Teil des Gegenwerkzeugs übertragenen Schwingungen individuell zu messen und insbesondere auch die in jedes einzelne Teil des Gegenwerkzeugs eingeleiteten Schwingungen individuell zu kontrollieren, insbesondere zu regeln.

Die Erfindung wird im folgenden in Zeichnungen und anhand der Ausführungbeispiele näher erläutert. Es zeigen:
- Fig. 1: eine schematische Darstellung eines ersten Ausführungsbespiels der vorliegenden Erfindung,
- Fig. 2a: eine schematische Darstellung einer Regelung der erfindungsgemässen Vorrichtung,
- Fig. 2b: eine Darstellung des Spannungsverlaufs am piezo-elektrischen Element
- Fig. 3: eine schematische Darstellung eines alternativen Ausführungsbeispiels der vorliegenden Erfindung und
- Fig. 4: eine schematische Darstellung eines weiteren alternativen Ausführungsbeispiels der vorliegenden Erfindung.

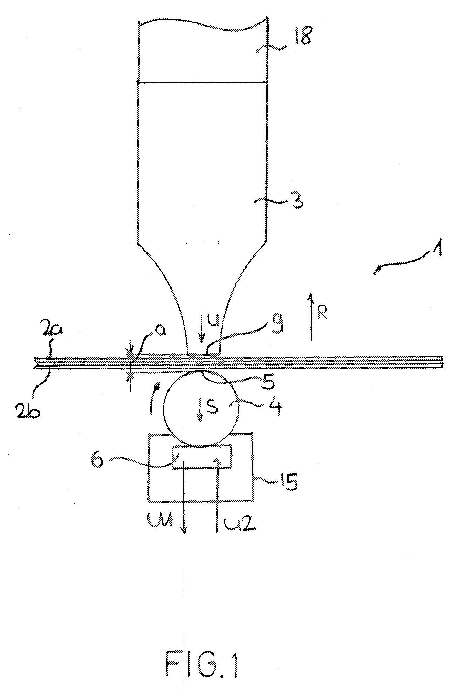

Fig. 1 zeigt eine Vorrichtung 1 zum Verschweissen von zwei Bauteilen. Eine erste Warenbahn 2a soll entlang einer Schweisslinie mit einer zweiten Warenbahn 2b verschweisst werden. Dazu wird die erste Warenbahn 2a mit einer aktiven Fläche 9 einer Sonotrode 3 mit Ultraschall U beaufschlagt. Die Sonotrode 3 ist durch einen Ultraschall-Konverter 18 in Schwingung versetzbar. Die beiden zu verschweissenden Warenbahnen 2a, 2b werden durch einen Spalt zwischen der aktiven Fläche 9 und einer Bearbeitungsstelle 5 eines Gegenwerkzeugs 4 hindurchgeführt. Das Gegenwerkzeug 4 ist in an sich bekannter Weise in Pfeilrichtung drehbar gelagert, so dass die Materialbahnen 2a, 2b durch den Spalt geführt werden können, ohne dass sich im Bereich der Bearbeitungsstelle 5 eine Reibung ergibt. Das Gegenwerkzeug 4 ist in einer Lagerung 15 gehalten. In der Lagerung 15 ist ein piezo-elektrisches Element 6 in Kontakt mit dem Gegenwerkzeug 4 vorgesehen. Das piezo-elektrische Element 6 übernimmt zwei Funktionen. Aufgrund der Materialbahnen 2a, 2b im Spalt zwischen der aktiven Fläche 9 der Sonotrode 3 und der Bearbeitungsstelle 5 des Gegenwerkzeugs 4 wird ein Teil der von der Ultraschall-Sonotrode 3 abgegebenen Ultraschall-Schwingung U in das Gegenwerkzeug 4 übertragen. Mit dem piezo-elektrischen Element 6 wird die in das Gegenwerkzeug 4 übertragene Schwingung S erfasst. Das piezo-elektrische Element 6 dient als Schwingungssensor und erzeugt ein dem Grad der Schwingung S im Gegenwerkzeug 4 entsprechendes Signal U1.

Gleichzeitig dient das piezo-elektrische Element 6 als Piezo-Aktuator, um das Gegenwerkzeug 4 in einer Richtung R gegen die Sonotrode 3 hin zu verschieben. Auf diese Weise lässt sich der Spalt a zwischen der Bearbeitungsstelle 5 des Gegenwerkzeugs 4 und der aktiven Sonotrodenfläche 9 und damit die in das Gegenwerkzeug übertragene Schwingung S einstellen. Die Betätigung des Piezo-Aktuators erfolgt durch Anlegen einer Gleichspannung U2 am piezo-elektrischen Element. Aufgrund des Signals U1 lässt sich durch Bewegung des Gegenwerkzeugs 4 die in das Gegenwerkzeug 4 übertragene Schwingung S regeln. Auf diese Weise kann die Beeinträchtigung des Gegenwerkzeugs 4 durch zu starke Ultraschall-Schwingungen reduziert werden. Ausserdem lässt sich zur Kontrolle eines Schneidvorgangs der Zeitpunkt, in welchem ein Kontakt zwischen der aktiven Sonotrodenfläche 9 und der Bearbeitungsstelle 5 eintritt, ermitteln. Zu diesem Zeitpunkt nimmt die in das Gegenwerkzeug 4 übertragene Schwingung S stark zu.

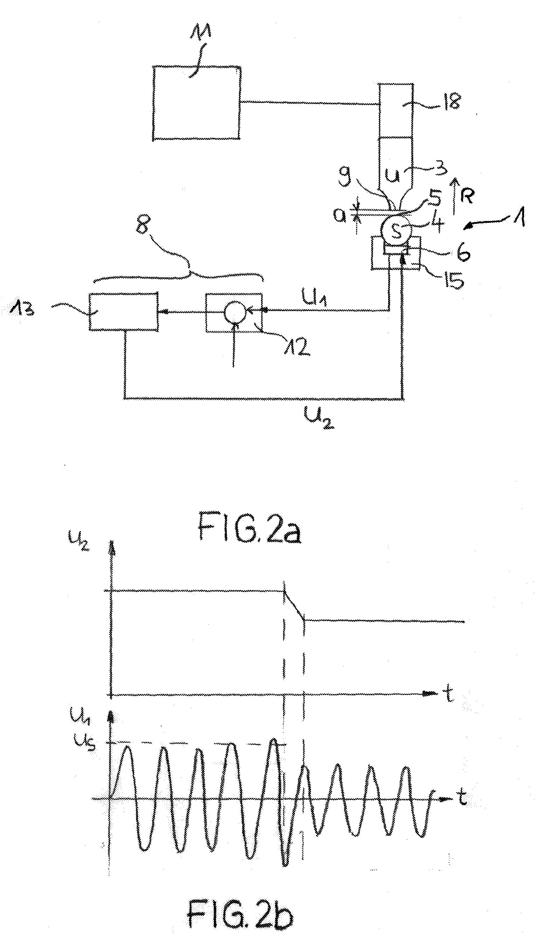

Die Regelungsanordnung, mit welcher die Vorrichtung 1 gemäss der Erfindung betrieben wird, ist schematisch in Fig. 2a gezeigt. Der Konverter 18 für die Sonotrode 3 wird mit einem Ultraschall-Generator 11 betrieben. Das Signal U1, welches für die in das Gegenwerkzeug 4 übertragene Schwingung S charakteristisch ist, wird einem Vergleicher 12 einer Regelungsanordnung 8 zugeführt. Ein Sollwert oder eine Sollwertkurve wird im Vergleicher vorgegeben. Mittels eines Reglers und eines Stellglieds 13 wird eine Gleichspannung U2 auf das piezo-elektrische Element 6 gegeben. In Abhängigkeit der Höhe der Gleichspannung U2 bewegt sich das piezo-elektrische Element 6 und damit das Gegenwerkzeug 4 in Richtung R gegen die Sonotrode 3 hin oder von dieser weg. Am piezo-elektrischen Element 6 ist daher eine Wechselspannung U1 (welche durch die Ultraschall-Schwingung im Gegenwerkzeug 4 erzeugt wird) der Gleichspannung U2 (welche zum Betätigen des piezo-elektrischen Elementes verwendet wird) überlagert. Fig. 2b zeigt schematisch den Verlauf der Gleichspannung U2 in Abhängigkeit der Ultraschall-Spannung U1. Die Ultraschall-Spannung U1 hat typischerweise eine Frequenz von etwa 20 kHz. Wenn die von der Sonotrode 3 auf das piezo-elektrische Element 6 übertragene Schwingung zu gross wird und die am piezo-elektrischen Element 6 erzeugte Spannung U1 einen Sollwert US übersteigt, wird die am piezo-elektrischen Element 6 angelegte Gleichspannung U2 reduziert. Die Regelung erfolgt typischerweise innerhalb einiger Perioden der Ultraschall-Schwingung (siehe Fig. 2b).

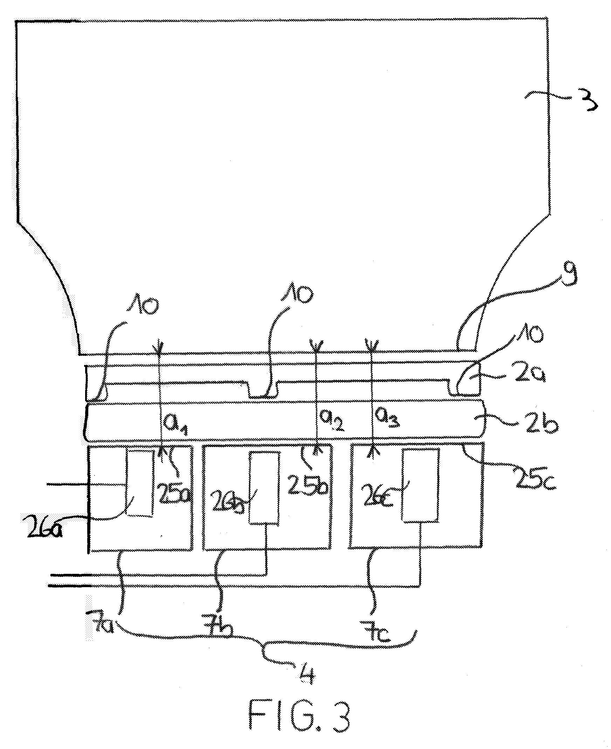

In Fig. 3 ist ein erstes alternatives Ausführungsbeispiel gezeigt. Gleiche Bezugszeichen benennen gleiche Elemente wie in Fig. 1 und 2. Im Gegensatz zu den Ausführungsbeispielen in den Fig. 1 und 2 ist das Gegenwerkzeug 4 durch drei einzelne Teile 7a, 7b, 7c gebildet. In jedem der Teile 7a, 7b, 7c ist ein Schwingungssensor in Form eines piezo-elektrischen Elements 26a, 26b, 26c angeordnet, der gleichzeitig als Piezo-Aktuator zum Bewegen der Bearbeitungsfläche 25a, 25b, 25c der einzelnen Teile 7a, 7b, 7c dient. Mit der Vorrichtung gemäss Fig. 3 lässt sich ein Bauteil 2a mit einem Bauteil 2b gezielt in einzelnen voneinander getrennten Fügestellen 10 verschweissen.

Mit dieser Vorrichtung lassen sich die Abstände a1, a2, a3 zwischen den Bearbeitungsstellen 25a, 25b, 25c einerseits und der aktiven Oberfläche 9 der Sonotrode 3 individuell einstellen.

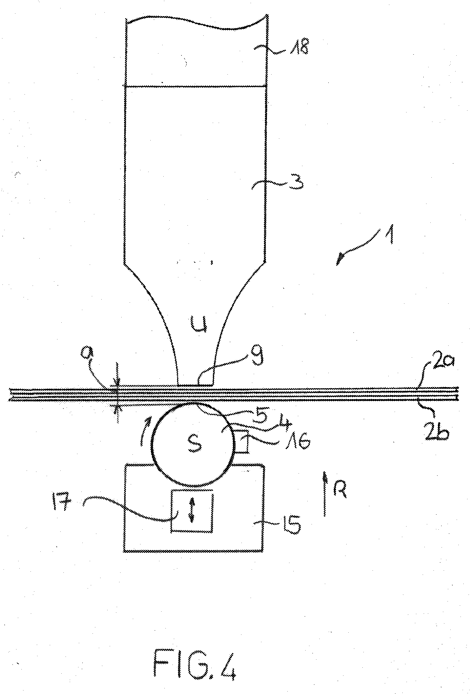

Fig. 4 zeigt ein weiteres Ausführungsbeispiel der Erfindung. Im Unterschied zum Ausführungsbeispiel gemäss Fig. 1 ist hier ein separates Betätigungselement 17 zur Bewegung des Gegenwerkzeugs 4 vorgesehen. Das Betätigungselement 17 kann beispielsweise durch einen Servomotor gebildet sein. Der Antrieb kann direkt oder indirekt erfolgen. Beispielsweise kann das Betätigungselement 17 auch einen Kniehebel aufweisen. Ein separater Schwingungssensor 16 ist direkt am Gegenwerkzeug 4 angeordnet. Es ist aber auch denkbar, den Schwingungssensor im Bereich der Lagerung 15 des Gegenwerkzeugs 4 anzuordnen.

## Patentansprüche

1. Vorrichtung (1) zum Bearbeiten, insbesondere Ultraschall-Verschweissen von insbesondere kontinuierlich geförderten Bauteilen (2a, 2b), mit wenigstens einer Sonotrode (3), mit welcher ein erstes Bauteil (2a) mit Ultraschall-Schwingungen (U) beaufschlagbar ist und
mit einem Gegenwerkzeug (4), auf welchem ein zweites Bauteil (2b) wenigstens im Bereich einer Bearbeitungsstelle (5; 5a, 5b, 5c) auflegbar ist,
**dadurch gekennzeichnet, dass** das Gegenwerkzeug (4) mit wenigstens einem Schwingungssensor (6; 16; 26a, 26b, 26c) versehen ist mittels welchem die von der Sonotrode (3) über das erste und das zweite Bauteil (2a, 2b) auf das Gegenwerkzeug (4) übertragene Schwingung (S), insbesondere deren Amplitude, messbar ist.

2. Vorrichtung nach Anspruch 1, **dadurch gekennzeichnet, dass** das Gegenwerkzeug (4) mit einer Verstelleinrichtung (6; 17; 26a, 26b, 26c) versehen ist, mit welcher das Gegenwerkzeug (4) in einer Richtung (R) gegen die Sonotrode (3) hin höhenverstellbar ist.

3. Vorrichtung nach Anspruch 2, **dadurch gekennzeichnet, dass** die Verstelleinrichtung mit wenigstens einem Piezo-Aktuator (6; 26a, 26b, 26c) versehen ist.

4. Vorrichtung nach Anspruch 3, **dadurch gekennzeichnet, dass** der Schwingungssensor durch den Piezo-Aktuator (6; 26a, 26b, 26c) gebildet ist.

5. Vorrichtung nach einem der Ansprüche 1 - 4, **dadurch gekennzeichnet, dass** das Gegenwerkzeug (4) mehrteilig ausgebildet ist und dass in jedem Teil (7a, 7b, 7c) des Gegenwerkzeugs (4) ein Schwingungssensor (26a, 26b, 26c) angeordnet ist.

6. Vorrichtung nach Anspruch 5, **dadurch gekennzeichnet, dass** in jedem Teil (7a, 7b, 7c) des Gegenwerkzeugs (4) ein einzelner Piezo-Aktuator (26a, 26b, 26c) angeordnet ist, der vorzugsweise je einen Schwingungssensor bildet.

7. Vorrichtung nach einem der Ansprüche 2 - 6, **dadurch gekennzeichnet, dass** die Vorrichtung (1) eine Regelungsanordnung (8) aufweist, mit welcher die Amplitude der in das Gegenwerkzeug (4) übertragenen Schwingung (S) regelbar ist, wobei die Amplitude der im Gegenwerkzeug (4) gemessenen Schwingung (S) Regelgrösse und der Abstand (a; a1, a2, a3) zwischen einer aktiven Sonotrodenfläche (9) und der Bearbeitungsstelle (5, 5a, 5b, 5c) des Gegenwerkzeugs (4) Stellgrösse ist.

8. Verfahren zum Bearbeiten, insbesondere Ultraschall-Schweissen von insbesondere kontinuierlich geförderten Bauteilen (2a, 2b), insbesondere mit einer Vorrichtung (1) nach einem der Ansprüche 1 - 7, enthaltend die Schritte
- Bereitstellen eines ersten Bauteils (2a), welches mit einer Sonotrode (3) mit Ultraschall-Schwingungen (U) beaufschlagbar ist
- Bereitstellen eines zweiten Bauteils (2b) auf einer Bearbeitungsstelle (5) eines Gegenwerkzeugs (4)
- Kontaktieren des ersten und des zweiten Bauteils (2a), (2b) im Bereich wenigstens einer Fügestelle (10) oder Schnittstelle,
- Beaufschlagen des ersten Bauteils (2a) mit Ultraschall-Schwingungen (U),
**gekennzeichnet durch** die weiteren Schritte
- Messen der in das Gegenwerkzeug (4) übertragenen Schwingung (S) mit einem Schwingungssensor (6; 16; 26a, 26b, 26c)
- Regeln der Amplitude der in das Gegenwerkzeug (4) übertragenen Schwingung (S), insbesondere **durch** Einstellen des Abstandes (a; a1, a2, a3) zwischen einer Bearbeitungsstelle (5; 5a, 5b, 5c)des Gegenwerkzeugs (4) und der aktiven Sonotrodenfläche (9).

9. Verfahren nach Anspruch 8, **dadurch gekennzeichnet, dass** das Gegenwerkzeug (4) mittels wenigstens einem Piezo-Aktuator (6; 26a, 26b, 26c) bewegt wird und dass insbesondere die in das Gegenwerkzeug (4) übertragene Schwingung (S) mit dem Piezo-Aktuator (6; 26a, 26b, 26c) gemessen wird.

10. Verfahren nach einem der Ansprüche 8 oder 9, mit einer Vorrichtung (1), bei welcher das Gegenwerkzeug (4) mehrteilig ausgebildet ist, **dadurch gekennzeichnet, dass** die in jedes einzelne Teil (7a, 7b, 7c) des Gegenwerkzeugs (4) übertragenen Schwingungen (S) individuell gemessen werden und dass insbesondere der Abstand (a1, a2, a3) der Bearbeitungsstellen (5a, 5b, 5c) jedes Teils (7a, 7b, 7c) zur aktiven Sonotrodenfläche (9) individuell eingestellt wird.
